# FASCICULE DE BREVET EUROPEEN

(11) **EP 1 899 389 B1**
(45) Date de publication et mention de la délivrance du brevet: **17.06.2009**
(21) Numéro de dépôt: 06724096.0
(22) Date de dépôt: 06.04.2006
(51) Int. Cl.: C08F 136/06, C08F 4/54

(54) **PROCEDE DE PREPARATION D'UN ELASTOMERE DIENIQUE, TEL QU'UN POLYBUTADIENE.**
VERFAHREN ZUR HERSTELLUNG EINES DIENELASTOMERS, WIE EINES POLYBUTADIENS
METHOD FOR PREPARING A DIENE ELASTOMER, SUCH AS A POLYBUTADIENE

(30) Priorité: 14.06.2005 FR 0506040
(43) Date de publication de la demande: 19.03.2008
(73) Titulaire: Société de Technologie Michelin, 63000 Clermont-Ferrand (FR); Michelin Recherche et Technique S.A., 1763 Granges-Paccot (CH)
(72) Inventeur: CANIVET, Clotilde, F-63370 Lempdes (FR); RASIGADE, Jean-Philippe, F-63100 Clermont-Ferrand (FR); BARBOTIN, Fanny, F-63000 Clermont-Ferrand (FR)
(74) Mandataire: Le Cam, Véronique Marie Christine
(86) Numéro de dépôt international: PCT/EP2006/003151
(87) Numéro de publication internationale: WO 2006/133757

(56) Documents cités:
- EP-A- 1 055 659
- WO-A-03/097708
- US-A1- 2004 102 589
- PATENT ABSTRACTS OF JAPAN vol. 008, no. 134 (C-230), 21 juin 1984 (1984-06-21) & JP 59 045311 A (NIPPON GOSEI GOMU KK), 14 mars 1984 (1984-03-14)

## Description

La présente invention concerne un procédé de préparation d'élastomères diéniques, tels que des homopolymères ou des copolymères du butadiène ou de l'isoprène. L'invention s'applique notamment à l'obtention d'un polybutadiène à taux élevé d'enchaînements cis-1,4 présentant à la fois une viscosité Mooney ML(1+4) égale ou supérieure à 40, un indice de polydispersité inférieur à 2,3 et un fluage à froid réduit, de préférence inférieur à 0.3.

Pour la préparation d'homopolymères ou de copolymères du butadiène ou de l'isoprène présentant un taux élevé d'enchaînement cis-1,4, il est connu d'utiliser des systèmes catalytiques à base :
- d'un sel de terre rare en solution dans un solvant hydrocarboné,
- d'un agent d'alkylation de ce sel constitué d'un alkylaluminium, et
- d'un halogénure d'un alkylaluminium.

Ainsi, le document de brevet RU 2,139,298 C1 enseigne un procédé de polymérisation de polyisoprène et de polybutadiène cis-1,4 par polymérisation du diène à l'aide d'un système catalytique « préformé » comprenant 3 constituants :
(a) un carboxylate de terre rare,
(b) un sesquichlorure d'alkylaluminium,
(c) un composé organométallique non halogéné de l'aluminium.

Le composé organométallique non halogéné de l'aluminium est ajouté soit avant, soit après les autres constituants a) et b) du catalyseur.

Cette introduction en décalé par rapport aux constituants a) et b) du constituant c), par la variation de la quantité introduite et du rapport molaire organo Al / terre rare, permet d'une part de réduire les quantités de catalyseur de terre rare et d'agent organométallique non halogéné de l'aluminium nécessaire et d'autre part de conférer une certaine souplesse au procédé de polymérisation. La polymérisation dans une batterie de réacteurs permet de réguler les caractéristiques des polymères visés et, dans une certaine limite, d'améliorer la fluidité à froid qui reste cependant pénalisante sur le plan de la mise en oeuvre industrielle pour les polymères ainsi obtenus.

Le document de brevet EP-B-1.055.659 enseigne, pour l'obtention d'un polybutadiène ayant une haute teneur en motifs 1,4-cis, l'usage d'un système catalytique à trois constituants :
(a) un néododécanoate de néodyme,
(b) un composé alkylaluminium ou l'hydrure correspondant,
(c) un halogénure organique,
éventuellement en présence d'un alkylaluminium en tant que modificateur de chaîne au titre de ses propriétés d'agent de transfert régulateur de la masse moléculaire.

Le document de brevet JP-A-59-45.311 décrit un procédé de préparation (en 2 phases) de polybutadiène ayant une teneur en motifs 1,4-cis supérieure à 70 % à l'aide d'un catalyseur à base de terres rares de la famille des lanthanides, d'un composé alkylaluminium à titre d'agent d'alkylation et d'un halogénure d'un alkylaluminium, la première phase consistant à polymériser le butadiène en présence du catalyseur ci-dessus et la deuxième phase consistant à ajouter, après 3 % de conversion du monomère, un hydrure d'aluminium. Cette addition en décalé de l'hydrure d'aluminium permet d'améliorer certaines propriétés du polybutadiène en raison de la possibilité de contrôler dans une certaine mesure la distribution des masses moléculaires et en particulier d'élargir la distribution de masse moléculaire.

Le document de brevet EP-B-207 558 enseigne, pour l'obtention d'un homopolymère ou d'un copolymère du butadiène présentant une viscosité Mooney sensiblement indépendante du taux de conversion des monomères :
- d'initier la réaction de polymérisation avec un système catalytique comprenant :
   a) un composé de néodyme choisi par l'oxyde de néodyme, les alcoolates, phénates et carboxylates de néodyme,
   b) un composé organique à groupe hydroxyle ou carboxyle,
   c) un composé organométallique non halogéné de l'aluminium, et
   d) un composé halogéné choisi parmi les halogénures d'alkyles secondaires ou tertiaires, les halogénures d'acides organiques, les halogénures métalliques et organométalliques, les acides halogéno-hydriques et les halogènes,
   de telle sorte que le rapport molaire (aluminium néodyme) dans ce système catalytique varie de 10 à 30 ; et
- d'ajouter d'une manière continue ou discontinue, après le début de la réaction de polymérisation et pendant un laps de temps au moins égal à la moitié de la durée totale de cette réaction, une quantité donnée de ce composé c) jusqu'à l'obtention d'un rapport molaire (aluminium/ néodyme) allant de 20 à 80.

Comme indiqué dans les exemples de réalisation de ce document, la finalité de cet ajout du composé organoaluminium postérieurement à l'initiation de la réaction de polymérisation est d'utiliser ses propriétés d'agent de transfert régulateur de la masse moléculaire et ainsi obtenir des viscosités Mooney ML(1+4) qui sont sensiblement constantes et inférieures aux viscosités Mooney qui sont obtenues en ajoutant ce composé en même temps que le système catalytique, c'est-à-dire inférieur ou égal à 40, ce qui ne rend pas ces polybutadiènes bien adaptés pour être utilisés dans des bandes de roulement d'enveloppe de pneumatique.

Les documents de brevet WO-A-02/38636 et WO-A-03/097708 au nom des Demanderesses enseignent, pour l'obtention de polybutadiènes et de polyisoprènes d'utiliser un système catalytique de type « préformé » à base d'au moins :
- un diène conjugué de préformation, tel que le butadiène,
- un sel d'un ou de plusieurs métaux de terre rare d'un acide phosphorique organique qui est en suspension dans au moins un solvant hydrocarboné inerte, saturé et de type aliphatique ou alicyclique, et
- un agent d'alkylation constitué d'un alkylaluminium de formule AlR3 ou HAlR2,
dans lesquelles R représente un radical alcoyle, préférentiellement de 1 à 8 atomes de carbone et H représente un atome d'hydrogène, et
- un donneur d'halogène qui appartient à la famille des halogénures d'alkylaluminium à l'exclusion des sesquihalogénures d'alkylaluminium.

Les polybutadiènes obtenus au moyen de ce système catalytique présentent notamment un indice de polydispersité inférieur à 2,1 et une viscosité Mooney ML(1+4) à 100° C qui peut être compris dans une fourchette de valeurs relativement large, de l'ordre de 25 à 80. Ces caractéristiques combinées rendent ces polybutadiènes bien adaptés pour être utilisés dans des bandes de roulement d'enveloppe de pneumatique.

Les polyisoprènes obtenus au moyen de ce système catalytique présentent notamment un indice de polydispersité inférieur à 2,30 et une viscosité Mooney ML (1+4) à 100 °C pouvant être comprise dans une fourchette de valeurs relativement large, de l'ordre de 40 à 100. Ces caractéristiques combinées rendent ces polyisoprènes bien adaptés pour être utilisés dans des bandes de roulement d'enveloppe de pneumatique.

Deux faiblesses existent cependant pour ce système catalytique. Tout d'abord, la synthèse est réalisée en discontinu mais en plus, les proportions relatives des quatre constituants sont fixées en fonction du (des) monomère(s) diénique(s) à polymériser, des caractéristiques visées pour le polymère attendu, du procédé de polymérisation (temps de séjour et température imposés par le matériel par exemple) et du niveau d'impuretés présent dans l'unité industrielle utilisée pour réaliser la polymérisation. Il est ainsi aisé de comprendre pour l'homme de l'art que ces deux derniers éléments (synthèse du catalyseur en discontinu et formulation dépendant de 4 paramètres) se traduisent par un manque de souplesse du système catalytique et donc du procédé de polymérisation, notamment dans le cadre de l'application à l'échelle industrielle.

La présente invention a pour but d'améliorer l'activité du système catalytique préformé pour le rendre plus flexible vis-à-vis des monomères polymérisables, des caractéristiques visées pour les polymères à synthétiser, des fluctuations du niveau d'impuretés présentes dans le réacteur de polymérisation et plus généralement dans l'unité industrielle, du temps de séjour dans le réacteur de polymérisation, pour que son application industrielle soit plus avantageuse.

Dans le cadre de recherches ayant pour but d'adapter les procédés de polymérisation au moyen de ce dernier système catalytique aux élastomères diéniques à obtenir et aux conditions de polymérisation rencontrées, les Demanderesses ont découvert que l'introduction en « décalé » dans l'unité industrielle de polymérisation, c'est-à-dire pas en même temps et, par conséquent, soit avant, soit après, soit en partie avant et en partie après, par rapport à l'introduction du système catalytique préformé utilisé pour la réaction de polymérisation d'au moins un composé alkylaluminium de formule AIR3 ou HAIR2 dans lesquelles R représente un radical alcoyle, préférentiellement de 1 à 8 atomes de carbone, et H représente un atome d'hydrogène, qui est identique ou non à celui dudit système catalytique utilisé comme agent d'alkylation, permet d'obtenir, avec une bonne flexibilité et à moindre coût, des élastomères diéniques à fort taux d'enchaînement cis-1,4, tels que des homo- ou copolymères du butadiène, ou de l'isoprène qui présentent à la fois des propriétés de viscosité Mooney ML(1+4) à 100 °C, de distribution étroite de masse moléculaire et de fluage à froid tout à fait satisfaisantes pour une utilisation dans des bandes de roulement de pneumatiques.

Le système catalytique selon l'invention comprend le ou les métaux de terre rare selon une concentration égale ou supérieure à 0,002 mol/L.

La quantité d'au moins un composé d'alkylaluminium de formule AIR3 ou HAIR2, qui est identique ou non à celui de l'agent d'alkylation dudit système catalytique, ajoutée est variable car fonction de l'un ou plusieurs ou tous les paramètres réactionnels énumérés à titre non limitatif ci-après, notamment du ou des monomère(s) diénique(s) à polymériser ou copolymériser, des conditions de polymérisation, des caractéristiques macrostructurales et/ou microstructurales visées de l'élastomère diénique à obtenir, du niveau fluctuant d'impuretés présentes dans l'unité industrielle de polymérisation, notamment dans le solvant de polymérisation, du temps de séjour dans le réacteur de polymérisation.

L'homme du métier ajustera dans l'unité industrielle de polymérisation, comme connu en soi, la quantité de composé alkylaluminium à ajouter en décalé par rapport au système catalytique en fonction du ou des paramètre(s) pris en considération.

Selon une forme d'exécution préférentielle de l'invention, l'introduction en décalé dudit composé alkylaluminium est réalisée par l'introduction de la totalité dudit composé alkylaluminium avant l'introduction du système catalytique et, par voie de conséquence, avant la polymérisation du monomère ou des monomères à polymériser ou copolymériser.

On notera que l'introduction en décalé dudit composé alkylaluminium par rapport à l'introduction du système catalytique préformé, mais avant polymérisation du ou des monomères, permet de moduler l'activité dudit système catalytique en fonction de la nature du ou des monomères choisis et des caractéristiques de macrostructure de l'élastomère diénique que l'on désire obtenir, telles que sa viscosité Mooney. Il est ainsi possible de faire varier, sur une unité dédiée à la polymérisation de monomères de réactivités respectives différentes et/ou dédiée à l'obtention d'élastomères présentant une large plage de viscosités Mooney, c'est-à-dire comprise entre 25 et 100, l'activité du système catalytique utilisé et donc le rendement de polymérisation, tout en utilisant une seule et même formule de système catalytique.

On notera également que cet ajout dudit composé alkylaluminium en décalé par rapport au système catalytique, préférentiellement avant polymérisation, permet de régler l'activité du système catalytique en fonction des conditions de polymérisation utilisées dans l'unité industrielle, telles que la température et/ou le temps de séjour dans le ou chaque réacteur de polymérisation, ce qui peut notamment constituer un gain de productivité en cas de réduction du temps de séjour pour l'obtention d'un élastomère de caractéristiques données.

On notera en outre que le fluage ou écoulement à froid (i.e. « cold flow ») réduit des élastomères qui est obtenu grâce au procédé selon l'invention témoigne d'un taux de branchement élevé des élastomères obtenus, sans mise en oeuvre d'une réaction de post-polymérisation de type « jumping » à l'aide de composés halogénés soufrés ou non. Ce fluage ou écoulement à froid (i.e. « cold flow ») réduit traduit l'aptitude réduite des élastomères à s'écouler sous une charge égale à leur propre poids notamment lorsque des échantillons ou « balles » de ces élastomères sont empilés les uns sur les autres dans des caisses de stockage. Il en résulte une minimisation du risque pour que ces échantillons débordent des caisses, provoquent de ce fait un effondrement de celles-ci et s'opposent à l'extraction des élastomères. Le fluage à froid est inférieur à 0,5 g et plus avantageusement inférieur à 0,3 g et égal ou supérieur à 0,01 g.

On notera que l'introduction en décalé du composé alkylaluminium peut également être effectuée après celle du système catalytique préformé sur une entrée de ligne du catalyseur, mais avant polymérisation du ou des monomères à polymériser.

Selon une autre caractéristique de l'invention, ladite réaction de polymérisation peut être mise en oeuvre en milieu dilué ou concentré (par milieu concentré, il faut entendre une concentration en monomère dans le solvant comprise entre 30 à 70 % en poids) dans un solvant de polymérisation hydrocarboné inerte, tel que du pentane, cyclohexane ou du méthylcyclohexane, ou bien en masse, et à une température allant de préférence de 0 à 100° C.

Selon une autre caractéristique avantageuse de l'invention, le rapport molaire (agent d'alkylation / sel de terre(s) rare(s)) dans ledit système catalytique présente une valeur réduite allant de 1 à 10 et, encore plus avantageusement, une valeur allant de 1 à 5.

On notera que l'ajout selon l'invention dudit composé alkylaluminium, avant l'utilisation du système catalytique présentant cette valeur réduite de rapport molaire, permet de reproduire en termes de macrostructure de l'élastomère (viscosité Mooney et fort taux d'enchaînements cis-1,4, notamment) le résultat obtenu avec un système catalytique analogue mais dont le rapport molaire précité serait plus élevé.

Il est essentiel de noter ici que cette utilisation d'un bas rapport molaire (agent d'alkylation / sel de terre(s) rare(s)) dans le système catalytique est possible grâce au fait que ce dernier comprend la sélection spécifique d'un sel de terre(s) rare(s) d'un acide phosphorique organique parmi l'ensemble de tous les composés de terre rare utilisés dans l'art antérieur, tels que les carboxylates de néodyme testés dans le document précité EP-B-207 558 qui ne sont pas utilisables dans le procédé selon l'invention.

On notera en outre que cette utilisation pour ledit rapport molaire d'une valeur réduite, conjointement à l'ajout en décalé, et préférentiellement préalable, dudit composé alkylaluminium, se traduit avantageusement par une quantité totale moindre d'alkylaluminium(s) (utilisé(s) à la fois dans ledit système catalytique et avant polymérisation), ce qui implique une réduction significative du coût de mise en oeuvre du procédé selon l'invention en comparaison d'un procédé qui utiliserait un système catalytique analogue mais dont le rapport molaire précité serait plus élevé et qui n'inclurait pas cet ajout préalable du composé organoaluminium.

Le rapport molaire (composé alkylaluminium ajouté en décalé et préférentiellement avant réaction / alkylaluminium (agent d'alkylation) dans le système catalytique) est strictement supérieur à 0 et selon une forme d'exécution avantageuse varie de 0,01 à 10, préférentiellement de 0,05 à 3, et plus préférentiellement de 0,05 à 1.

Selon une autre caractéristique préférentielle de l'invention, la quantité dudit composé alkylaluminium introduite en décalé varie de 10 à 5000 micromoles pour 100 g de monomère diène conjugué à polymériser, notamment en fonction des caractéristiques de macrostructure visées pour ledit élastomère et/ou de la quantité d'impuretés présentes dans l'unité industrielle de polymérisation, telles que des impuretés provenant de solvants de recyclage.

A titre encore plus préférentiel, on peut utiliser ledit composé alkylaluminium selon une quantité allant de 50 à 1000 micromoles pour 100 g de monomère diène conjugué à polymériser, puis ledit système catalytique selon un rapport molaire (agent d'alkylation / sel de terre(s) rare(s)) allant de 1 à 5.

La réaction de polymérisation peut être mise en oeuvre comme connu en soi, en continu, en discontinu, en solution, en masse ou en milieu concentré.

Avantageusement, on met en oeuvre la réaction de polymérisation en continu, ledit composé alkylaluminium étant mis en présence avec le(s)dit(s) monomère(s) à polymériser en une entrée de ligne située en amont d'au moins un réacteur de polymérisation de l'unité industrielle de polymérisation.

On notera que dans ce cas, et cela d'autant plus que le rapport molaire précité est plus réduit, l'ajout du composé alkylaluminium avant polymérisation permet de s'affranchir des fluctuations dans le temps des impuretés dues aux solvants de polymérisation qui sont recyclés en entrée de ligne, de ne pas pénaliser, du fait de ces fluctuations, l'activité du système catalytique, de sorte à minimiser la dispersion des caractéristiques de l'élastomère obtenu.

On notera que l'ajout en décalé du composé alkylaluminium permet également de s'affranchir des fluctuations dans le temps des réactifs et additifs classiques de polymérisation anionique qui sont à considérer comme des impuretés pour un système catalytique à base de terres rares et qui sont présents dans une unité industrielle de polymérisation travaillant par campagnes de production d'élastomères alternativement par catalyse anionique et par catalyse à base de sels de métaux de terres rares.

On notera que l'ajout en décalé du composé alkylaluminium permet également d'obtenir, même en présence de telles impuretés, la reproduction mentionnée ci-dessus du résultat procuré par un système catalytique analogue, mais dont le rapport molaire précité serait plus élevé.

On notera que l'ajout en décalé du composé alkylaluminium permet de moduler à tout instant le rapport agent d'alkylation / sel de terre rare par la quantité de composé alkylaluminium ajoutée aux différents instants et ainsi disposer d'un procédé de polymérisation véritablement flexible permettant de régler ou de varier de manière prédictive et simple l'activité du système catalytique.

Selon une autre forme d'exécution de l'invention, on incorpore ledit système catalytique dans sa totalité dans l'unité industrielle de polymérisation, directement dans le réacteur de polymérisation.

En d'autres termes, le procédé de préparation selon l'invention présente une grande flexibilité d'utilisation en polymérisation continue ou discontinue, du fait qu'il rend l'unique système catalytique utilisé équivalent à une palette de systèmes catalytiques d'activités différentes et permet de disposer d'une ligne de polymérisation mixte permettant alternativement une polymérisation anionique pour préparer des homopolymères de diènes conjugués et des copolymères de diène(s) conjugués et de composé(s) vinylaromatique(s), notamment des polybutadiènes et des SBR, et une polymérisation à l'aide de métaux de terre rare pour préparer des homopolymères de diène(s) conjugués et des copolymères de diène(s) conjugués.

A titre de système catalytique de type « préformé » utilisable dans le procédé de polymérisation selon l'invention, on se reportera aux documents précités WO-A-02/38636 et WO-A-03/097708 au nom des Demanderesses. Bien entendu, par l'expression « à base de » utilisée pour définir les constituants de ce système catalytique, on entend le mélange de ces constituants et/ou le produit de la réaction entre ces constituants.

A titre de monomère diène conjugué utilisable pour « préformer » le système catalytique selon l'invention, on peut citer le 1, 3-butadiène, à titre préférentiel.

On peut également citer le 2-méthyl-1, 3-butadiène (ou isoprène), les 2, 3-di (alkyle en C1 à C5)-1, 3-butadiène tels que par exemple le 2, 3-diméthyl-1, 3-butadiène, le 2, 3-diéthyl-1, 3-butadiène, le 2-méthyl-3-éthyl-1, 3-butadiène, le 2-méthyl-3-isopropyl-1, 3-butadiène, le phényl-1, 3-butadiène, le 1, 3-pentadiène, le 2, 4-hexadiène, ou tout autre diène conjugué ayant entre 4 et 8 atomes de carbone.

On notera que le rapport molaire (monomère de préformation / sel de terre rare) peut présenter une valeur allant de 15 à 70 et avantageusement de 25 à 50.

Le sel de terre rare est constitué d'une poudre non hygroscopique ayant une légère tendance à s'agglomérer à la température ambiante.

Selon un mode préférentiel de réalisation de l'invention, le solvant hydrocarboné inerte dans lequel ledit sel de terre rare est en suspension est un solvant aliphatique ou alicyclique de bas poids moléculaire, tel que le cyclohexane, le méthylcyclohexane, le n-heptane, ou un mélange de ces solvants.

A titre encore plus préférentiel, on utilise le méthylcyclohexane à titre de solvant hydrocarboné inerte.

Selon un autre mode de réalisation du système catalytique mis en oeuvre dans l'invention, ledit solvant utilisé pour la suspension du sel de terre rare est un mélange d'un solvant aliphatique de haut poids moléculaire comprenant une huile paraffinique, par exemple de l'huile de vaseline, et d'un solvant de bas poids moléculaire tel que ceux susmentionnés (par exemple le cyclohexane ou le méthylcyclohexane). On réalise alors cette suspension en procédant à un broyage dispersif du sel de terre rare dans cette huile paraffinique, de sorte à obtenir une suspension très fine et homogène du sel.

Selon un exemple préférentiel de réalisation de l'invention, on utilise à titre de sel un tris[bis(2-éthylhexyl)phosphate] dudit ou desdits métaux de terre rare.

A titre encore plus préférentiel, ledit sel de terre rare est le tris[bis(2-éthylhexyl)phosphate] de néodyme (Nd(P204)3 en abrégé ci-après).

A titre d'alkylaluminium utilisable pour constituer ledit agent d'alkylation dans le système catalytique, et ledit composé alkylaluminium ajouté selon l'invention en décalé par rapport au système catalytique préformé c'est-à-dire avant ou après le système catalytique de polymérisation, on peut citer des alkylaluminiums tels que :
- des trialkylaluminiums, par exemple le triisobutylaluminium, ou
- des hydrures de dialkylaluminium, par exemple l'hydrure de diisobutylaluminium.

On notera que l'agent d'alkylation et le composé alkylaluminium sont de préférence constitués de l'hydrure de diisobutylaluminium.

A titre d'halogénure d'alkylaluminium utilisable comme donneur d'halogène dans le système catalytique selon l'invention, on utilise de préférence un monohalogénure d'alkylaluminium et, à titre encore plus préférentiel, le chlorure de diéthylaluminium.

Selon l'invention, on notera que le rapport molaire (donneur d'halogène / sel de terre rare) peut présenter une valeur allant de 2 à 3,5 et, de préférence, allant de 2,6 à 3.

Selon un mode avantageux de réalisation de l'invention, pour la constitution du système catalytique on utilise en combinaison l'hydrure de diisobutylaluminium et le chlorure de diéthylaluminium à titre d'agent d'alkylation et de donneur d'halogène, respectivement.

On notera que les sesquihalogénures d'alkylaluminium, tels que les sesquichlorures d'éthylaluminium, ne sont pas utilisables dans les systèmes catalytiques mis en oeuvre dans le procédé selon l'invention, du fait qu'ils conduisent à une forte pénalisation de l'activité catalytique, notamment en terme de pourcentage de conversion, et permettent difficilement d'obtenir des polybutadiènes présentant un indice de polydispersité inférieur à 2,1.

Selon une autre caractéristique préférentielle du procédé selon l'invention, ledit système catalytique comprend le ou les métaux de terre rare selon une concentration allant de 0,010 mol/l à 0,1 mol/l et, plus avantageusement, une concentration égale ou sensiblement égale à 0,02 mol/L.

On notera également que cette exclusion des sesquihalogénures d'alkylaluminium combinée à cette concentration minimale de 0,002 mol/l en métal ou métaux de terre rare pour l'obtention de polybutadiènes permet d'obtenir des polybutadiènes présentant à la fois une viscosité Mooney ML(1+4) à 100° C égale ou supérieure à 40 et un indice de polydispersité Ip inférieur à 2,1 et des polyisoprènes présentant à la fois une viscosité Mooney (1+4) à 100 °C égale ou supérieure à 60 et un indice de polydispersibilité inférieur à 2,3.

Les systèmes catalytiques utilisés dans le procédé selon l'invention sont préparés en mettant en oeuvre les étapes suivantes :
- dans une première étape optionnelle de solvatation, on réalise une suspension dudit sel de terre(s) rare(s) dans ledit solvant hydrocarboné inerte,
- dans une seconde étape, on ajoute à la suspension obtenue à la première étape ledit monomère diène conjugué ou bien, dans le cas où la première étape n'a pas été mise en oeuvre, on ajoute audit sel ledit solvant en plus dudit monomère diène conjugué,
- dans une troisième étape, on ajoute ledit agent d'alkylation à la suspension obtenue au terme de ladite seconde étape pour l'obtention d'un sel alkylé, et
- dans une quatrième étape, on ajoute ledit donneur d'halogène audit sel alkylé.

A titre d'élastomère diénique pouvant être préparé par le procédé selon l'invention, on peut citer tout homopolymère ou copolymère obtenu par homopolymérisation ou copolymérisation d'au moins un monomère diène conjugué ayant de 4 à 12 atomes de carbone.

A titre de monomère(s) diène(s) conjugué(s) conviennent notamment le butadiène-1,3, l'isoprène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

Les élastomères peuvent être par exemple à blocs, statistiques, séquencés, microséquencés.

De manière particulièrement préférentielle, ledit élastomère diénique est choisi dans le groupe des élastomères diéniques fortement insaturés constitué par les polybutadiènes (BR), les polyisoprènes de synthèse (IR).

On notera que les systèmes catalytiques utilisés dans le procédé selon l'invention permettent notamment d'obtenir des polybutadiènes présentant un taux élevé et reproductible d'enchaînement cis-1,4 supérieur à 90 % (mesuré par la technique « NIR » de dosage par proche infrarouge, voir annexe 1 jointe), de même que des polyisoprènes présentant un taux élevé et reproductible d'enchaînement cis-1,4 supérieur à 96 % (mesuré par la technique « NIR » de dosage par proche infrarouge, voir annexe 1 jointe).

Avantageusement, le procédé selon l'invention permet d'obtenir, lorsque la polymérisation est réalisée à une température allant de 25 °C à 55 °C, des polyisoprènes présentant des taux d'enchaînements cis-1,4, mesurés selon la technique de dosage par moyen infrarouge, qui appartiennent à un domaine allant de 98,0 % à 98,5 % (à l'incertitude de mesure de plus ou moins 0,1 % près qui est inhérente à cette technique).

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les dessins joints, parmi lesquels :
La figure 1 est un graphique illustrant la variation de la viscosité Mooney ML(1+4) de polybutadiènes préparés selon le procédé de l'invention, en fonction de la quantité du composé alkylaluminium ajouté avant la réaction de polymérisation ;
La figure 2 est un graphique illustrant la variation du taux d'enchaînement cis-1,4 de ces mêmes polybutadiènes en fonction de la quantité précitée de ce composé alkylaluminium ;
La figure 3 est un graphique illustrant l'évolution du taux de conversion (en %) du butadiène en fonction du temps (min), d'une part pour différents rapports alkylaluminium (ajouté avant la réaction de polymérisation) /sel de terre rare, et d'autre part pour un essai « témoin » sans alkylaluminium ;
Les figures 4 à 8 illustrent les intérêts de l'invention en polymérisation du butadiène et de l'isoprène et compare celle-ci à des systèmes catalytiques qui lui sont non-conformes.

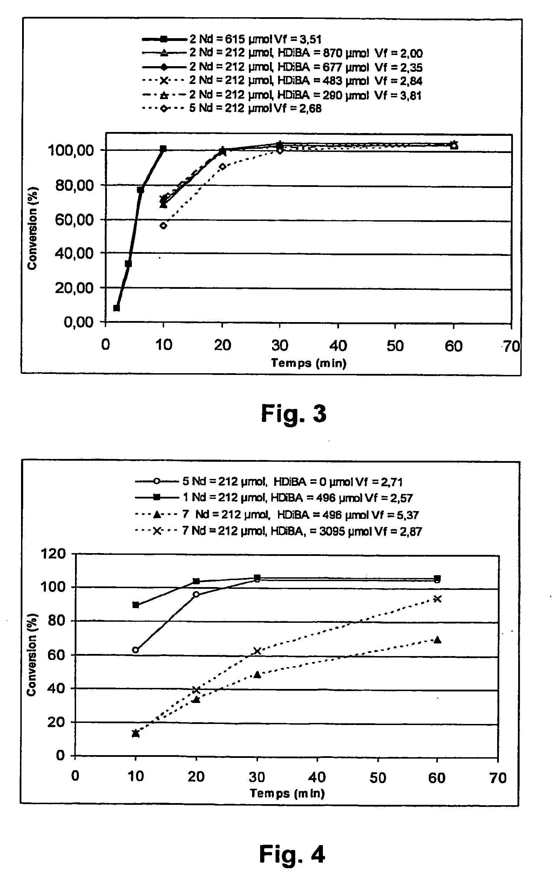

La figure 4 est un graphique illustrant l'évolution du taux de conversion (en %) du butadiène en fonction du temps (min) en fonction de l'agent halogénant qui est, d'une part un donneur d'halogène non-conforme : le sesquichlorure de diethylaluminium, et d'autre part un donneur d'halogène conforme à l'invention : le chlorure de diéthylaluminium ;

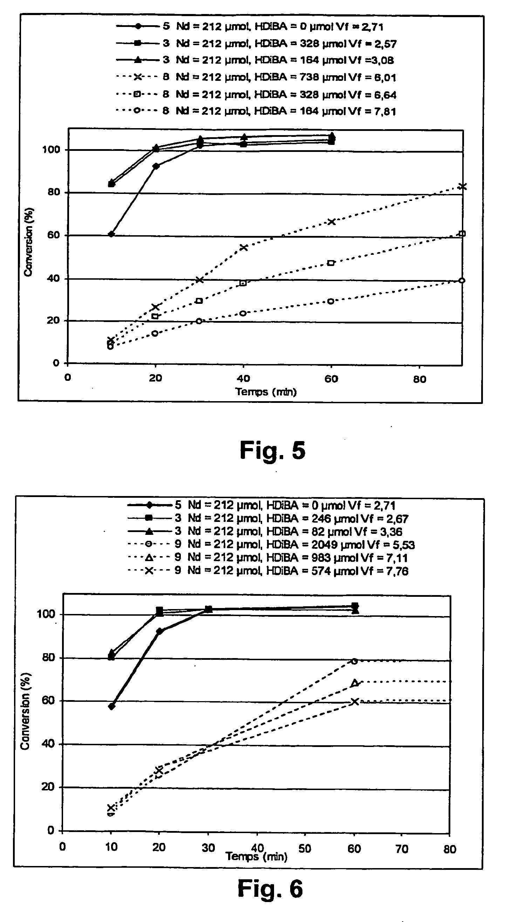

La figure 5 est un graphique illustrant l'évolution du taux de conversion (en %) du butadiène en fonction du temps (min) et de la nature du sel de terre rare utilisé pour le système catalytique. Celui-ci est d'une part un carboxylate de néodyme non conforme : le tris-[2-éthylhexanoate] de néodyme et d'autre part un phosphate de néodyme conforme à l'invention : le tris-[bis-(2-éthylhexyl) phosphate)] de néodyme ;
La figure 6 est un graphique illustrant l'évolution du taux de conversion (en %) du butadiène en fonction du temps (min) et de l'apport en une seule fois en décalé de la totalité de l'alkylaluminium à différent rapports alkylaluminium (ajouté avant la réaction de polymérisation) / sel de terre rare ;

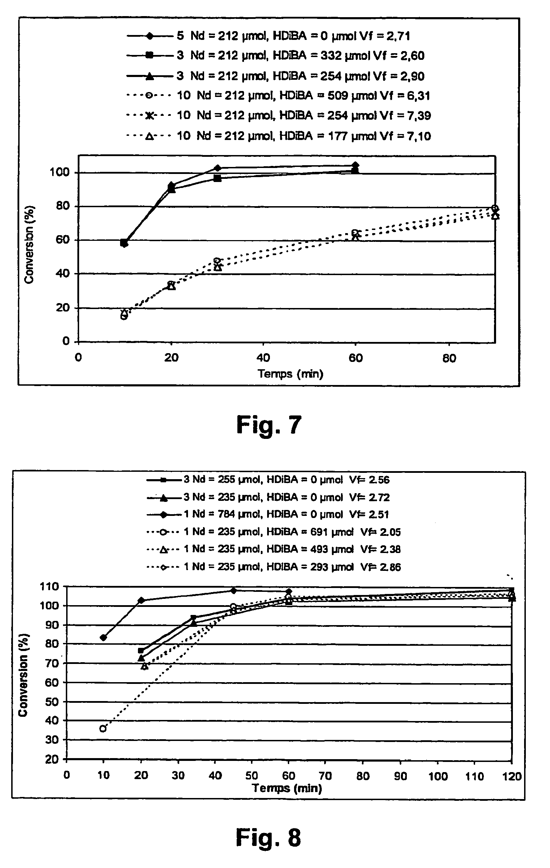

La figure 7 est un graphique illustrant l'évolution du taux de conversion (en %) du butadiène en fonction du temps (min) et de la concentration du sel de Nd pour différents rapports alkylaluminium (ajouté avant la réaction de polymérisation) / sel de terre rare, d'une part pour un essai de polymérisation conforme à l'invention avec une concentration en sel de terre rare usuelle de 0,02 mol/L, et d'autre part un essai de polymérisation comparatif avec une concentration en sel de terre rare réduite d'un facteur 100 ;
La figure 8 est un graphique illustrant l'évolution du taux de conversion (en %) de l'isoprène en fonction du temps (min) et de l'apport, d'une part en une seule fois de la totalité de l'alkylaluminium sous forme d'agent d'alkylation, et d'autre part de l'apport en décalé de l'alkylaluminium (ajouté avant la réaction de polymérisation) à différents rapport alkylaluminium / sel de terre rare.

La microstructure des élastomères est déterminée selon la technique de dosage appelée « proche infrarouge » décrite à l'Annexe 1.

La distribution des masses moléculaires des élastomères est déterminée selon la technique de chromatographie d'exclusion stérique (SEC) décrite à l'Annexe 2.

Les indices viscoélastiques cotan δ sont mesurés selon la méthode décrite à l'Annexe 3.

Le fluage à froid est mesuré selon la méthode décrite à l'Annexe 4.

### I. PREPARATION DE SYSTEMES CATALYTIOUES :

On a préparé six systèmes catalytiques 1 à 6 selon l'invention, en suivant le mode de préparation décrit au paragraphe I. du document précité WO-A-03/097708 au nom des Demanderesses.

En vue de l'obtention de chacun de ces systèmes catalytiques 1 à 6, on a versé le sel correspondant de néodyme à l'état de poudre dans un réacteur préalablement nettoyé de ses impuretés. On a soumis ensuite ce sel à un barbotage à l'azote pendant 15 min, puis on a mis en oeuvre les étapes successives suivantes pour chaque système catalytique 1 à 6 :

### - Première étape de solvatation :

On a introduit un solvant constitué de méthylcyclohexane (MCH) dans le réacteur contenant le sel de néodyme en vue de la formation d'un gel, la durée et la température de mise en contact de ce solvant et du sel de néodyme étant de 30 minutes à une température de 30° C.

### - Seconde étape de « préformation » :

On a introduit ensuite du butadiène dans le réacteur à une température de 30° C.

### - Troisième étape d'alkylation :

On a introduit ensuite dans le réacteur de l'hydrure de diisobutylaluminium (HDiBA) à titre d'agent d'alkylation du sel de néodyme, selon une concentration d'environ 1 M. La durée de l'alkylation est de 15 min. La température de la réaction d'alkylation est égale à 30° C.

### - Quatrième étape d'halogénation :

On a introduit ensuite dans le réacteur du chlorure de diéthylaluminium (CDEA) à titre de donneur d'halogène, selon une concentration d'environ 1 M. La température du milieu réactionnel a été portée à 60° C.

### - Cinquième étape de vieillissement :

On a procédé ensuite à un vieillissement du mélange ainsi obtenu en maintenant cette température de 60° C pendant une durée de 60 min.

On a stocké finalement chaque solution catalytique obtenue sous atmosphère d'azote à une température comprise entre -15° C et -5 ° C.

Les systèmes catalytiques 1 à 6 selon l'invention obtenus présentent les rapports molaires suivants (butadiène, agent d'alkylation et donneur d'halogène « DH ») par rapport au sel de néodyme : Nd/ butadiène/ HDiBA/ DH = 1 / 50 / x / 3.

Avec x : rapport molaire (HDiBA / Nd) respectivement égal à 1.3, 2, 3, 4, 6 et 8 pour les systèmes catalytiques (1), (2), (3), (4), (5) et (6).

4 systèmes catalytiques non conformes à l'invention ont également été préparés suivant le même mode opératoire aux détails suivants près :
Le système catalytique non conforme (7) de rapport Nd/ butadiène/ HDiBA/ DH = 1 / 50 / 1.3 / 3 a été préparé non pas à partir de CDEA mais de sesquichlorure de diéthylaluminium. Il est à comparer au système catalytique selon l'invention 1.
Le système catalytique non conforme (8) de rapport Nd/ butadiène/ HDiBA/ DH = 1 / 50 / 3 / 3 a été préparé non pas à partir de tris-[bis-(2-éthylhexyl) phosphate] de néodyme mais de tris-[2-éthylhexanoate] de néodyme. Il est à comparer au système catalytique selon l'invention (3).
Le système catalytique non conforme (9) de rapport Nd/ butadiène/ HDiBA/ DH = 1 / 50 / 0 / 3 a été préparé sans HDiBA (pas d'alkylation). Il est à comparer au système catalytique selon l'invention (3).
Le système catalytique non conforme (10) de rapport Nd/ butadiène/ HDiBA/ DH = 1150 / 3 / 3 a été préparé non pas à une concentration en néodyme de 0.02 M mais à une concentration de 0.0002 M. Il est à comparer au système catalytique selon l'invention (3).

### II. Polymérisation du butadiène en solution et en continu au moyen de ces systèmes catalytiques 2, 4, 5 et 6 :

### 1) Mode opératoire suivi pour les diverses polymérisations :

La polymérisation est réalisée dans ces exemples sur une ligne continue à deux réacteurs en série R1 et R2 identiques, de 14 litres, dont les températures sont respectivement fixées à 90° C et 98° C, et le temps de séjour à 45 minutes par réacteur.

Le monomère diénique à polymériser (i.e. le butadiène, Btd en abrégé), le solvant de polymérisation (méthylcyclohexane : MCH) et le composé alkylaluminium (HDiBA) sont injectés en entrée de ligne dans un mélangeur dynamique prévu en amont des deux réacteurs, puis le mélange ainsi obtenu est introduit dans le premier réacteur R1. Chaque système catalytique testé 1 à 4 est injecté directement dans ce premier réacteur sous agitation mécanique via des pales.

Le stoppeur et l'antioxydant utilisés sont l'acide oléique, selon 1 pce, et la N-1,3-diméthylbutyl-N'-phényl-paraphénylènediamine, selon 0,5 pce (pce : parties en poids pour 100 parties d'élastomère obtenu). Ce stoppeur et cet antioxydant sont injectés l'un après l'autre en sortie des réacteurs, en amont de mélangeurs statiques.

La quantité de néodyme dans chaque système catalytique est exprimée en µmol pour 100 g de monomère butadiène (quantité exprimée en µMcm ci-après).

### 2) Essais de polymérisation effectués au moyen de ces systèmes catalytiques :

### a) Essais A à E selon l'invention mis en oeuvre via ledit système catalytique 2 :

Les résultats figurant dans le tableau 1 ci-après illustrent la flexibilité offerte par l'injection en entrée de ligne d'une quantité de composé alkylaluminium (« HDiBA pré-ajouté ») qui varie de 400 à 1000 µmol pour 100 g de monomère butadiène (µMcm ci-après), en termes de caractéristiques des polybutadiènes obtenus :
- viscosité Mooney ML(1+4) et fluidité ;
- taux d'enchaînements cis-1,4, trans-1,4 et 1,2, mesurés par la technique « NIR » décrite à l'annexe 1;
- masse moléculaire moyenne en nombre Mn et indice de polydispersité Ip, mesurés par la méthode de chromatographie d'exclusion par la taille (SEC) décrite à l'annexe 2;
- cotan δ, mesuré selon l'annexe 3 ; et
- fluage à froid ou « cold flow », mesuré selon l'annexe 4.

Le système catalytique 2 utilisé qui présente la formule Nd(P204)3/Btd/HDiBA/CDEA = 1/50/2/3, est incorporé au milieu de polymérisation à raison d'une même quantité de 188 µMcm pour chaque essai A à E, suite audit composé alkylaluminium.
Les taux de conversion dans chacun des réacteurs R1 et R2 seront désignés ci-après par les abréviations CR1, CR2.

**Tableau 1 :**

| | **Polymérisation** | | | **Caractéristiques des polybutadiènes obtenus** | | | | | | | | |
|---|---|---|---|---|---|---|---|---|---|---|---|---|
| **Essais** | HDiBA pré-ajouté | CR1 (%) | CR2 (%) | ML (1+4) | cis-1-4 | trans-1,4 | 1,2 (%) | Mn (g/mol) | Ip | Fluage à froid (g) | Fluidité F150 * | cotan δ |
| | (µMcm) | | | | (%) | (%) | | | | | | |
| **A** | 400 | 100 | 100 | 79,5 | 94,2 | 5,3 | 0,6 | 173052 | 2,06 | 0,05 | 43 | 1,10 |
| **B** | 500 | 99 | 100 | 67,4 | 93,7 | 5,8 | 0,5 | 161376 | 2,03 | 0,02 | 52 | 1,02 |
| **C** | 600 | 100 | 100 | 56,5 | 93,0 | 6,5 | 0,5 | 147159 | 2,01 | 0,06 | 64 | 1,01 |
| **D** | 800 | 100 | 100 | 44 | 92,2 | 7,2 | 0,6 | 126927 | 2,02 | 0,10 | 78 | 0,98 |
| **E** | 1000 | 98 | 100 | 34 | 91,2 | 8,2 | 0,6 | 122594 | 1,94 | 0,19 | 100 | 0,97 |

| | | | | | | | | | | | | |
|---|---|---|---|---|---|---|---|---|---|---|---|---|
| *moyenne de 3 mesures. | | | | | | | | | | | | |

Ce tableau 1 montre essentiellement que les cinétiques de polymérisation sont sensiblement identiques, quelle que soit la quantité du composé alkylaluminium ajoutée au monomère à polymériser avant l'ajout du système catalytique à ce dernier.

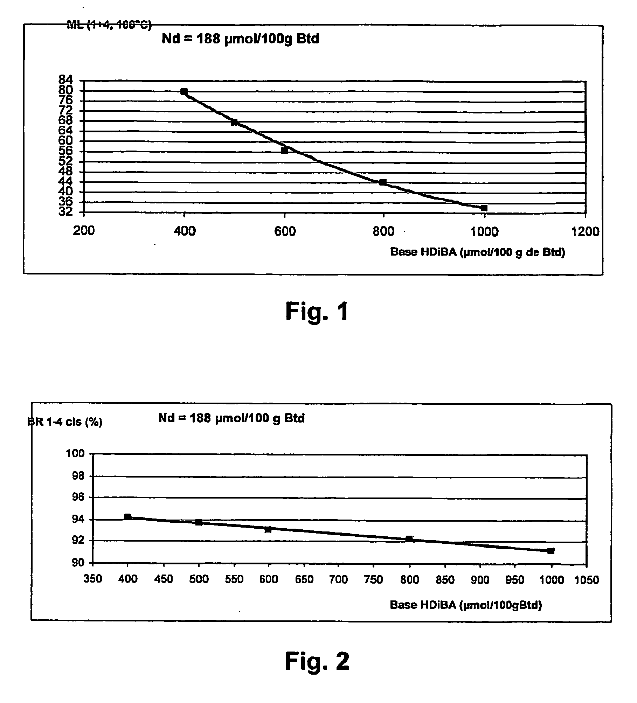

Le graphique de la figure 1 montre que la viscosité Mooney ML(1+4) à 100° C des polybutadiènes obtenus à ces essais A à E varie fortement avec la proportion par rapport au butadiène, du composé alkylaluminium HDiBA introduite préalablement au catalyseur de polymérisation et que, plus cette proportion du composé alkylaluminium est élevée, plus la viscosité Mooney du polybutadiène obtenue est réduite.

Le graphique de la figure 2 montre que le taux d'enchaînement cis-1,4 des polybutadiènes obtenus à ces essais A à E est sensiblement constant lorsque la proportion du composé alkylaluminium HDiBA introduite préalablement au catalyseur de polymérisation varie dans les mêmes conditions, ce taux d'enchaînements cis-1,4 étant compris entre 91 % et 95 %.

En d'autres termes, pour un système catalytique de rapport molaire Al/Nd prédéterminé (égal à 2 pour ces essais A à E) qui est introduit dans une proportion donnée, il est possible grâce à un ajout en quantité variable du composé alkylaluminium au monomère à polymériser, avant ajout du système catalytique, d'obtenir une large gamme de polybutadiènes présentant des caractéristiques de macrostructure différentes, sans pénaliser la cinétique de polymérisation ni la microstructure de ces polybutadiènes.

Ce tableau 1 montre que le fluage à froid reste très faible quelle que soit la quantité du composé alkylaluminium ajoutée au(x) monomère(s) à polymériser avant l'ajout du système catalytique à ce(s) demier(s).

### b) Essai F « témoin » mis en oeuvre via le système catalytique 6 et essais G, H, I selon l'invention mis en oeuvre via les systèmes catalytiques 2 et 5 :

Les résultats figurant dans le tableau 2 ci-après illustrent notamment le gain relatif en coût catalytique procuré par l'injection en entrée de ligne d'une quantité du même composé HDiBA qui varie de 0 à 735 µMcm, pour des polybutadiènes obtenus qui présentent sensiblement entre eux les mêmes caractéristiques de macrostructure et de microstructure.

Sont indiquées pour chaque essai les quantités de HDiBA qui sont utilisées, d'une part, dans le système catalytique correspondant (« syst.cat. » en abrégé) et, d'autre part, à titre de « pré-ajout » en entrée de ligne au milieu de polymérisation, étant précisé que l'essai F « témoin » n'est caractérisé par aucun pré-ajout de composé HDiBA.

Les systèmes catalytiques 2, 5, 6 présentent respectivement la formule Nd(P204)3Btd/HDiBA/CDEA = 1/50/2 ou 6 ou 8/3, et chacun d'eux est incorporé au milieu de polymérisation à raison de 188 µMcm pour les essais F, G, H et de 160 µMcm pour l'essai I.

**Tableau 2 :**

| | **Polymérisation** | | | | **Caractéristiques des polybutadiènes obtenus** | | | | | | | | | | | |
|---|---|---|---|---|---|---|---|---|---|---|---|---|---|---|---|---|
| **Essais** | syst. cat : Al/Nd | Nd (µMcm) | EDiBA (µMcm) | | CR1 % | CR2 % | ML | cis-1,4 | trans-1,4 | 1,2 | Fluidité Fl50 * | cotan δ | Fluage à froid (g) | Mn (g/mol) | Ip | Coût catal. relatif |
| | | | Syst.cat. | pré-ajout | | | | (%) | (%) | (%) | | | | | | |
| **F** | 6 : | 188 | 1504 | 0 | 87 | 100 | 42,7 | 93,4 | 6,0 | 0,6 | 86 | 0,91 | 0,15 | 131341 | 2,15 | 100 |
| | Al/Nd=8 | | | | | | | | | | | | | | | |
| **G** | 5 : | 188 | 1128 | 200 | 90 | 99 | 43,5 | 93,1 | 6,3 | 0,6 | - | - | 0,12 | 133327 | 2,05 | 95,9 |
| | Al/Nd=6 | | | | | | | | | | | | | | | |
| **H** | 2 : | 188 | 376 | 735 | 95 | 100 | 43,0 | 92,3 | 7,2 | 0,6 | 86 | 0,95 | 0,14 | 125275 | 2,03 | 90,5 |
| | Al/Nd=2 | | | | | | | | | | | | | | | |
| **I** | 2 : | 160 | 320 | 735 | 98 | 100 | 43,9 | 93,8 | 5,7 | 0,5 | 89 | 0,94 | 0,13 | 135238 | 1,98 | 79,7 |
| | Al/Nd=2 | | | | | | | | | | | | | | | |

| | | | | | | | | | | | | | | | | |
|---|---|---|---|---|---|---|---|---|---|---|---|---|---|---|---|---|
| *moyenne de 3 mesures. | | | | | | | | | | | | | | | | |

Ces différents essais montrent que pour l'obtention d'un polybutadiène présentant un taux élevé et sensiblement constant d'enchaînement cis-1,4 (supérieur à 92 %) et une viscosité Mooney ML(1+4) supérieure à 40 et sensiblement égale à 43, on peut utiliser :
- soit le système catalytique 6 de haut rapport molaire Al/Nd = 8 (essai « témoin » F),
- soit les systèmes catalytiques 5 ou 2 de plus bas rapport molaire Al/Nd = 6 ou 2, respectivement, associés à une proportion d'HDiBA pré-ajouté qui est alors choisie d'autant plus élevée que le rapport Al/Nd du système catalytique est plus réduit (essais G et H).

En d'autres termes, les essais F, G, H montrent que l'on est parvenu à reproduire les caractéristiques d'un polybutadiène obtenu avec le système catalytique 6 de haut rapport Al/Nd, en utilisant dans les mêmes proportions un système catalytique 2 ou 5 de plus bas rapport Al/Nd, le déficit en aluminium inhérent à ce plus bas rapport étant compensé par le pré-ajout d'HDiBA au milieu de polymérisation.

On notera que cette utilisation d'un système catalytique de bas rapport Al/Nd (par exemple inférieur ou égal à 6) dans des proportions qui sont celles d'un rapport supérieur (par exemple égal à 8) combinée à un supplément d'HDiBA pré-incorporé en entrée de ligne est une solution globalement moins coûteuse comme le montre la dernière colonne du tableau 2 et, par conséquent, avantageuse sur le plan industriel.

On notera en outre qu'il est même possible de minimiser encore le coût catalytique de la polymérisation en réduisant au plus juste la quantité (160 µMcm) de ce système catalytique à bas rapport Al/Nd, toujours pour l'obtention d'un polybutadiène sensiblement identique, comme le montre l'essai I avec le système catalytique 2.

### c) Essais J, L et P « témoin » respectivement mis en oeuvre via les systèmes catalytiques 4, 5 et 6 et essais K, M, N, O, Q, R, S, T selon l'invention tous mis en oeuvre via le système catalytique 2 :

Les résultats figurant dans le tableau 3 ci-après illustrent la flexibilité apportée par l'injection en entrée de ligne d'une quantité variable du composé alkylaluminium (HDiBA), vis-à-vis des fluctuations d'impuretés (« impur. » en abrégé ci-après, en ppm) dues aux solvants de recyclage qui sont présentes dans cette entrée de ligne.

Les systèmes catalytiques 2, 4, 5 et 6 utilisés répondent respectivement à la formule Nd(P204)3/Btd/HDiBA/CDEA = 1/50/2, 4, 6 et 8/3.

Les impuretés présentes en entrée de ligne étaient le toluène, l'éthyl tétrahydrofurfuryl éther (« ETE » ci-après) et le styrène (« Sty » ci-après).

**Tableau 3 :**

| | **Polymérisation** | | | | | | **Caractéristiques des polybutadiènes obtenus** | | | | | | | | | |
|---|---|---|---|---|---|---|---|---|---|---|---|---|---|---|---|---|
| **Essais** | Syst cat: Al/Nd | Impur. (ppm) | Nd (µMcm) | Pré-ajout HDiBA (µMcm) | C R1 % | C R2 % | ML | cis-1,4 (%) | trans-1,4 | 1,2 | Fluidité F150* | cotan δ | Mn (g/mol) | Ip | Fluage à froid (g) | Coût catal. relatif |
| | | | | | | | | | (%) | (%) | | | | | | |
| **J** | 4 : | ETE 3 ppm | 360 | 0 | 97 | 100 | 44,6 | 89,4 | 10,0 | 0,6 | 77 | 0,96 | 128394 | 2,18 | 0,12 | 155,6 |
| | Al/Nd=4 | | | | | | | | | | | | | | | |
| **K** | 2 : | | 360 | 560 | 100 | 100 | 43,0 | 89,7 | 9,7 | 0,6 | 83 | 0,91 | 127294 | 2,00 | 0,18 | 151,5 |
| | Al/Nd=2 | | | | | | | | | | | | | | | |
| **L** | 5 : | ETE 0,5 ppm | 260 | 0 | 95 | 100 | 41,0 | 91,0 | 8,4 | 0,6 | 83 | 0,96 | 128235 | 2,04 | 0,15 | 125,6 |
| | Al/Nd=6 | | | | | | | | | | | | | | | |
| **M** | 2 : | | 260 | 750 | 100 | 100 | 43,0 | 89,3 | 10,2 | 0,6 | 80 | 1,02 | 126858 | 2,08 | 0,09 | 117,9 |
| | Al/Nd=2 | | | | | | | | | | | | | | | |
| **N** | 2: | ETE/Sty 0,5 / 50 ppm | 260 | 650 | 100 | 100 | 44,7 | 91,6 | 7,8 | 0,6 | 94 | 0,97 | 131581 | 2,04 | 0,11 | 115,6 |
| | Al/Nd=2 | | | | | | | | | | | | | | | |
| **O** | 2 : | | 160 | 650 | 93 | 100 | 47,2 | 95,8 | 3,7 | 0,6 | 85 | 0,83 | 139294 | 2,05 | 0,18 | 77,7 |
| | Al/Nd=2 | | | | | | | | | | | | | | | |
| **P** | 6 : | aucune | 188 | 0 | 87 | 100 | 42,7 | 93,4 | 6,0 | 0,6 | 86 | 0,91 | 131341 | 2,15 | 0,15 | 39 |
| | Al/Nd=8 | | | | | | | | | | | | | | | |
| **Q** | 2 : | | 188 | 735 | 95 | 100 | 43,0 | 92,3 | 7,2 | 0,6 | 86 | 0,95 | 125275 | 2,04 | 0,14 | 90,5 |
| | Al/Nd=2 | | | | | | | | | | | | | | | |
| **R** | 2 : | | 160 | 735 | 98 | 100 | 43,9 | 93,8 | 5,7 | 0,5 | 89 | 0,94 | 135238 | 1,98 | 0,13 | 79,7 |
| | Al/Nd=2 | | | | | | | | | | | | | | | |
| **S** | 2 : | Toluène | 160 | 735 | 98 | 100 | 40,0 | 93,7 | 5,7 | 0,5 | 107 | 0,88 | 128213 | 1,94 | 0,22 | - |
| | Al/Nd=2 | 600 ppm | | | | | | | | | | | | | | |
| **T** | 2 : | Toluène | 160 | 630 | 95 | 100 | 44,4 | 94,8 | 4,7 | 0,5 | 100 | 0,84 | 139674 | 1,94 | 0,17 | - |
| | Al/Nd=2 | 1000 ppm | | | | | | | | | | | | | | |

| | | | | | | | | | | | | | | | | |
|---|---|---|---|---|---|---|---|---|---|---|---|---|---|---|---|---|
| *moyenne de 3 mesures. | | | | | | | | | | | | | | | | |

Il ressort de ce tableau 3 que les systèmes catalytiques selon l'invention tolèrent d'autant plus d'impuretés qu'ils présentent chacun un rapport molaire Al/Nd plus réduit (de préférence égal à 2), c'est-à-dire qu'ils sont plus actifs.

Les résultats de ce tableau 3 confirment par ailleurs les conclusions du paragraphe b) ci-dessus, à savoir que, même en présence d'impuretés en entrée de ligne, l'on parvient à reproduire les caractéristiques d'un polybutadiène obtenu avec un système catalytique de haut rapport Al/Nd, en utilisant dans les mêmes proportions un système catalytique de plus bas rapport Al/Nd après avoir incorporé le composé alkylaluminium au monomère à polymériser.
En outre, cette incorporation préalable du composé alkylaluminium au monomère à polymériser permet de ne pas changer la formule du système catalytique en cas d'augmentation du niveau d'impuretés en entrée de ligne (voir les essais où le taux d'ETE passe de 0 à 3 ppm et où le taux de toluène passe de 0 à 1000 ppm) pour l'obtention d'un polybutadiène donné. Ainsi, il n'est pas utile pour ce faire de passer d'un système catalytique de rapport Al/Nd=8 à un autre de rapport 6 ou 4, du fait qu'il suffit d'ajuster la quantité de composé alkylaluminium pré-incorporé et éventuellement celle du système catalytique (quantité de Nd) pour maintenir les polybutadiènes obtenus dans les spécifications prévues.

### III. Polymérisation du butadiène et de l'isoprène en solution et en discontinu au moyen des systèmes catalytiques 1, 2, 3, 5, 7, 8, 9 et 10 :

### 1) Mode opératoire suivi pour les diverses polymérisations:

La polymérisation est réalisée pour ces exemples dans des bouteilles « Steinie » de 250 mL dont l'étanchéité est assurée par un ensemble de type « joint-capsule percée » permettant l'injection des réactifs au moyen de seringues. La polymérisation est réalisée avec un rapport massique Solvant/Monomère sous atmosphère inerte d'azote égal à 9.2. Elle est effectuée de manière dynamique avec une agitation et un maintien en température réalisés dans un bac à eau thermorégulé.

Le monomère diénique à polymériser (i.e. le butadiène, Btd en abrégé, ou l'isoprène) est préalablement barboté à l'azote.

Dans une bouteille « Steinie » de 250 mL sont chargés 132 mL de méthylcyclohexane (MCH). Après 10 minutes de barbotage à l'azote, il reste dans la bouteille 124 mL (95.5 g) de MCH auxquels on ajoute 10.0 g de monomère préalablement barboté à l'azote. L'alkylaluminium s'il y en a est ensuite injecté à la seringue suivi du catalyseur selon les quantités indiquées au tableau 4. La bouteille est alors placée sous agitation à 50 °C pendant le temps nécessaire pour atteindre 100 % de conversion en monomère. 1 mL de méthanol est additionné pour stopper la réaction puis, 1 mL d'une solution de N-1,3-diméthylbutyl-N'-phényl-paraphénylènediamine à 20 g/L destiné à antioxyder le polybutadiène est également ajouté.

### 2) Essais de polymérisation du butadiène effectués au moyen de ces systèmes catalytiques :

### a) Essais U à Z selon l'invention mis en oeuvre via les systèmes catalytiques 2 et 5 :

Les résultats figurant dans le tableau 4 ci-après et la figure 3 illustrent le gain en activité apporté par un catalyseur de bas rapport associé à un alkylaluminium par rapport à un catalyseur de plus haut rapport égal au rapport A1 total/Nd du précédent système :

**Tableau 4 :**

| **Essais** | syst. cat : Al/Nd | Nd (µMcm) | HDiBA (µMcm) | | Al total/Nd | Temps (min) | C % | Viscosité finale (dL/g) |
|---|---|---|---|---|---|---|---|---|
| | | | Syst.cat. | pré-ajout | | | | |
| **U** | 2 : | 615 | 1230 | 0 | 2 | 10 | 100.7 | 3.51 |
| | Al/Nd=2 | | | | | | | |
| **V** | 2 : | 212 | 424 | 870 | 6.1 | 60 | 104.7 | 2.00 |
| | Al/Nd=2 | | | | | | | |
| **W** | 2 : | 212 | 424 | 677 | 5.2 | 60 | 103.5 | 2.35 |
| | Al/Nd=2 | | | | | | | |
| **X** | 2 : | 212 | 424 | 483 | 4.3 | 60 | 103.8 | 2.84 |
| | Al/Nd=2 | | | | | | | |
| **Y** | 2 : | 212 | 424 | 290 | 3.3 | 60 | 103.4 | 3.81 |
| | Al/Nd=2 | | | | | | | |
| **Z** | 5 : | 212 | 1272 | 0 | 6 | 60 | 103.2 | 2.68 |
| | Al/Nd=6 | | | | | | | |

Ces résultats schématisés Fig. 3 illustrent bien le fait que la polymérisation est d'autant plus rapide que la proportion de néodyme est importante (essais U à Y) et que, pour une même quantité de néodyme injectée, cette cinétique est faiblement influencée par les variations d'alkylaluminium ajoutées avant le catalyseur (essais V à Y). On observe également très bien que la variation de la quantité d'alkylaluminium ajouté avant le catalyseur impact directement et de façon marquée la viscosité du polymère obtenu. Ainsi, plus la quantité d'alkylaluminium est élevée, plus la viscosité est faible.

Ces résultats montrent également que pour un rapport Al/Nd donné, l'activité du système catalytique n'est pas la même si ce rapport Al/Nd est intrinsèque au catalyseur ou s'il résulte de l'association d'un catalyseur à un alkylaluminium. Ainsi, dans le cas de l'essai V mettant en jeu un rapport Altotal/Nd = 6.1 et pour lequel l'aluminium est issu à la fois du catalyseur et de l'ajout décalé, on observe une activité bien meilleure que celle qui est obtenue à l'essai Z dont le rapport Altotal/Nd = 6 mais pour lequel la totalité de l'aluminium est apportée par le catalyseur. Ainsi, à iso rapport Altotal/Nd, l'activité est meilleure dans le cas où une partie de l'aluminium est ajoutée en décalée que dans le cas où le catalyseur apporte la totalité de l'aluminium.

Enfin, ce tableau met également en évidence le gain en coût catalytique apporté par la mise en oeuvre de l'invention. En effet, si on compare l'essai X et l'essai Z qui conduisent à des polybutadiènes très proches (viscosité voisine de 2.75 dL/g), on observe que, dans le cas où l'aluminium est partiellement ajouté en décalé, la quantité d'aluminium total est inférieure à celle qu'il faut ajouter lorsqu'on procède en un unique apport via le catalyseur.

### b) Essais α à τ selon l'invention mis en oeuvre via les systèmes catalytiques 1, 3, 7, 8, 9 et 10 :

Les résultats figurant dans le tableau 5 ci-après et les figures 4, 5, 6, 7 et 8 illustrent différents aspects de l'invention.

**Tableau 5 :**

| **Essais** | syst. cat : Al/Nd | Nd (µMcm) | HDiBA (µMcm) | | Temps (min) | %C | Viscosité finale (dL/g) | cis-1,4 (%) | Mn (g/mol) et Ip |
|---|---|---|---|---|---|---|---|---|---|
| | | | Syst.cat. | pré-ajout | | | | | |
| α | 5 : | 212 | 1272 | - | 60 | 105.0 | 2.71 | 97.5 | 166095/1.69 |
| | Al/Nd=6 | | | | | | | | |
| β | 1: | 212 | 275.6 | 496 | 60 | 106.0 | 2.57 | 98.6 | 151110/1.75 |
| | Al/Nd=1.3 | | | | | | | | |
| χ1 | 7 : | 212 | 275.6 | 496 | 60 | 70 | 5.37 | - | - |
| | Al/Nd=1.3 | | | | | | | | |
| χ2 | 7 : | 212 | 275.6 | 3095 | 60 | 94 | 2.87 | 99.0 | 38856/8.98 |
| | Al/Nd=1.3 | | | | | | | | |
| δ1 | 3 : | 212 | 636 | 328 | 60 | 104.1 | 2.57 | - | - |
| | Al/Nd=3 | | | | | | | | |
| δ2 | 3 : | 212 | 636 | 164 | 60 | 107.4 | 3.08 | - | - |
| | Al/Nd=3 | | | | | | | | |
| ε1 | 8 : | 212 | 636 | 164 | 90 | 40.2 | 7.81 | - | - |
| | Al/Nd=3 | | | | | | | | |
| ε2 | 8 : | 212 | 636 | 328 | 90 | 61.9 | 6.64 | - | - |
| | Al/Nd=3 | | | | | | | | |
| ε3 | 8 : | 212 | 636 | 738 | 90 | 84.0 | 6.01 | - | - |
| | Al/Nd=3 | | | | | | | | |
| φ1 | 3 : | 212 | 636 | 246 | 60 | 104.6 | 2.67 | 96.7 | 189310/1.55 |
| | Al/Nd=3 | | | | | | | | |
| φ2 | 3: | 212 | 636 | 82 | 60 | 103.1 | 3.36 | 97.3 | 258009/1.52 |
| | Al/Nd=3 | | | | | | | | |
| γ1 | 9 : | 212 | 0 | 2049 | 1020 | 103.2 | 5.53 | - | - |
| | Al/Nd=0 | | | | | | | | |
| γ2 | 9 : | 212 | 0 | 983 | 1020 | 99.5 | 7.11 | - | - |
| | Al/Nd=0 | | | | | | | | |
| γ3 | 9 : | 212 | 0 | 574 | 1020 | 80.7 | 7.76 | - | - |
| | Al/Nd=0 | | | | | | | | |
| η1* | 3 : | 212 | 636 | 332 | 60 | 100.7 | 2.60 | - | - |
| | Al/Nd=3 | | | | | | | | |
| η2* | 3 : | 212 | 636 | 254 | 60 | 101.3 | 2.90 | - | - |
| | Al/Nd=3 | | | | | | | | |
| τ1* | 10 : | 212 | 636 | 509 | 90 | 79.6 | 6.31 | - | - |
| | Al/Nd=3 | | | | | | | | |
| τ2* | 10 : | 212 | 636 | 254 | 90 | 76.9 | 7.39 | - | - |
| | Al/Nd=3 | | | | | | | | |
| τ3* | 10 : | 212 | 636 | 177 | 90 | 75.3 | 7.10 | - | - |
| | Al/Nd=3 | | | | | | | | |

| | | | | | | | | | |
|---|---|---|---|---|---|---|---|---|---|
| * Pour des raisons pratiques, ces polymérisations ont été réalisées avec un rapport massique MCH/butadiène égal à 13. | | | | | | | | | |

On voit tout d'abord qu'il n'est pas avantageux d'utiliser le sesquichlorure de diéthylaluminium à la place du chlorure de diéthylaluminium car, toute chose étant égale par ailleurs, celui-ci entraîne une forte pénalisation de l'activité catalytique (cf. Fig. 4), une augmentation des viscosités très importante et une dégradation de macrostructure (de l'Ip).

De même, le catalyseur non conforme à base de carboxylate de néodyme (8) donne de moins bons résultats que le catalyseur analogue selon l'invention à base de phosphate de néodyme (3). Ces résultats sont illustrés Fig. 5. Les cinétiques et les viscosités sont là encore fortement pénalisées, de façon toutefois moins prononcée qu'avec le catalyseur à base de sesquichlorure de .diéthylaluminium (7). Pour rattraper une viscosité de 2.4 dL/g, étant donné les tendances qui se dégagent des essais ε, on pressent qu'il faudrait dépasser les 2000 µMcm d'HDiBA ajouté en décalé ce qui impliquerait une augmentation rédhibitoire du coût catalytique.

Les résultats du tableau 5 illustrés Fig. 6 montrent qu'il n'est pas avantageux d'introduire la totalité de l'alkylaluminium (agent d'alkylation plus composé d'alkylaluminium) en une seule fois, par addition décalée par rapport au catalyseur néodyme comme c'est le cas avec le catalyseur (9) lorsqu'on utilise comme alkylaluminium ajouté en décalé le même composé que celui utilisé comme agent alkylant entrant dans la composition du catalyseur et qu'il est indispensable que le catalyseur contienne déjà une partie de l'alkylaluminium afin d'avoir une activité catalytique satisfaisante à l'échelle industrielle tout en conduisant à un polymère possédant des propriétés satisfaisantes pour une utilisation dans des bandes de roulement de pneumatiques avec un coût catalytique acceptable.

Enfin, les résultats obtenus avec le catalyseur (10) illustrent bien les difficultés posées par une concentration en néodyme trop faible. En effet, un facteur 100 sur la dilution entraîne une forte pénalisation cinétique (Fig. 7) et une augmentation prononcée des viscosités. Ainsi, pour obtenir avec le catalyseur dilué (10) un polybutadiène de même viscosité que celle du témoin, il faudrait considérablement augmenter la quantité d'HDiBA ajouté en décalé. De même, pour accélérer la cinétique de polymérisation catalysée par le catalyseur (10), il faudrait augmenter la quantité de néodyme injecté. Le coût catalytique s'en trouverait fortement pénalisé

### 3) Essais de polymérisation de l'isoprène effectués au moyen des systèmes catalytiques 1 et 3 :

Les résultats, illustrés figure 8, figurant dans le tableau 6 ci-après illustrent l'application de l'invention à la polymérisation de l'isoprène.

**Tableau 6 :**

| **Essais** | sys. cat : Al/Nd | Nd (µMcm) | HDiBA (µMcm) | | Temps (min) | %C | Viscosité finale (dL/g) | cis-1,4 (%) | Mn (g/mol) et Ip |
|---|---|---|---|---|---|---|---|---|---|
| | | | Syst.cat. | pré-ajout | | | | | |
| ϕ**1** | 3 : | 255 | 765 | - | 120 | 108.7 | 2.56 | 96.9 | 275865/1.92 |
| | Al/Nd=3 | | | | | | | | |
| ϕ**2** | 3 : | 235 | 705 | - | 120 | 105.0 | 2.72 | - | - |
| | Al/Nd=3 | | | | | | | | |
| κ**1** | 1 : | 784 | 1019.2 | - | 60 | 107.7 | 2.51 | 96.3 | 264834/1.93 |
| | Al/Nd=1.3 | | | | | | | | |
| κ**1** | 1 : | 235 | 305.5 | 691 | 120 | 106.3 | 2.05 | - | - |
| | Al/Nd=1.3 | | | | | | | | |
| κ**1** | 1 : | 235 | 305.5 | 493 | 120 | 106.0 | 2.38 | - | - |
| | Al/Nd=1.3 | | | | | | | | |
| κ**1** | 1 : | 235 | 305.5 | 296 | 120 | 105.6 | 2.86 | 96.9 | 284144/2.18 |
| | Al/Nd=1.3 | | | | | | | | |

### IV. Polymérisation du butadiène en masse et en continu au moyen du système catalytigue 2 :

La polymérisation est ici réalisée dans un réacteur de 36 L à pâles en Z muni d'une double enveloppe de refroidissement, d'un condenseur et d'une vis sans fin. Le solvant utilisé est le pentane et le rapport massique solvant/monomère sous atmosphère inerte d'azote est égal à 1. Le temps de séjour est fixé à 90 minutes et la température de la double enveloppe est maintenue à 40 °C.

Le butadiène est injecté dans le flux de solvant (temps de contact ∼3 s) suivi de l'HDiBA (temps de contact maximal ∼1 s). Ce mélange est additionné dans le réacteur dans lequel arrive également via une voie d'injection indépendante le catalyseur. Après 90 minutes de temps de séjour, le polybutadiène est stoppé puis antioxydé par injection d'un mélange d'acide oléique (1 pce) et de N-1,3-diméthylbutyl-N'-phényl-paraphénylènediamine (0.5 pce) additionnés en sortie du réacteur. Le polymère est ensuite strippé puis séché.

Le tableau 7 rapporte les résultats obtenus pour la polymérisation et pour le produit résultant :

**Tableau 7 :**

| **Essais** | syst. cat : Al/Nd | Nd (µMcm) | HDiBA (µMcm) | | %C | ML | cis-1,4 (%) | trans-1,4 (%) | 1,2 (%) | Fluidité F150* | Mn (g/mol) et Ip | Fluage à froid (g) |
|---|---|---|---|---|---|---|---|---|---|---|---|---|
| | | | Syst.cat. | pré-ajout | | | | | | | | |
| λ | 2: | 70 | 140 | 1060 | 100 | 45 | 96.7 | 2.8 | <0.5 | 91 | 138271 | 0.11 |
| | Al/Nd=2 | | | | | | | | | | 2.14 | |

Le polybutadiène obtenu présente des caractéristiques analogues à celles de l'essai R. Ces résultats illustrent bien la possibilité d'appliquer le système catalytique de la présente invention à la polymérisation en masse de façon aussi efficace qu'en solution.

### ANNEXE 1 : Détermination de la microstructure des polybutadiènes et polyisoprènes obtenus.

On a utilisé la technique de dosage appelée « proche infrarouge » (NIR). II s'agit d'une méthode indirecte faisant appel à des élastomères « témoin » dont la microstructure a été mesurée par la technique de RMN13C. On utilise la relation quantitative (loi de Beer-Lambert) existant entre la répartition des monomères dans un élastomère et la forme du spectre NIR de celui-ci. Cette technique est mise en oeuvre en deux étapes :
1) Etalonnage :
   - On procède à l'acquisition des spectres respectifs des élastomères « témoin ».
   - On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :
      (1) P. GELADI et B. R. KOWALSKI « Partial Least Squares regression : a tutorial », Analytica Chimica Acta, vol. 185, 1-17 (1986).
      (2) M. TENENHAUS « La régression PLS - Théorie et pratique » Paris, Editions Technip (1998).
2) Mesure :
   - On procède à un enregistrement du spectre de l'échantillon.
   - On réalise le calcul de la microstructure.

### ANNEXE 2 :

### Détermination de la distribution des masses molaires des polybutadiènes obtenus par la technique de chromatographie d'exclusion stérique (SEC).

### a) Principe de la mesure:

La chromatographie d'exclusion stérique ou SEC (size exclusion chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

### b) Préparation du polymère:

Il n'y a pas de traitement particulier de l'échantillon de polymère avant analyse. Celui-ci est simplement solubilisé dans du tétrahydrofurane à une concentration d'environ 1 g/l.

### c) Analyse SEC:

Cas c1) L'appareillage utilisé est une chaîne chromatographique « WATERS alliance ». Le solvant d'élution est le tétrahydrofurane, le débit de 1 ml/min., la température du système de 35° C et la durée d'analyse de 30 min. On utilise un jeu de deux colonnes WATERS de dénomination commerciale « STYRAGEL HT6E ».

Le volume injecté de la solution de l'échantillon de polymère est 100 µl. Le détecteur est un réfractomètre différentiel « WATERS 2140 » et le logiciel d'exploitation des données chromatographiques est le système « WATERS MILLENIUM ».

Cas c2) L'appareillage utilisé est un chromatographe « WATERS alliance ». Le solvant d'élution est le tétrahydrofurane, le débit de 0,7 ml/mn, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS modèle RI32X » et le logiciel d'exploitation des données chromatographiques est le système « WATERS MILLENIUM ».

Dans les deux cas, les masses molaires moyennes calculées sont relatives à une courbes d'étalonnage réalisées pour des polybutadiènes de microstructure suivante : 11 % massique de motifs type 1-2 et 48 % massique de motifs type 1-4 trans.

### ANNEXE 3 :

### Mesures des indices viscoélastiques cotan δ

En vue de caractériser le degré de branching des échantillons de polybutadiènes obtenus selon l'invention, on a mesuré leur indice viscoélastique (ive). Cet ive exprime le rapport de la part élastique à la part visqueuse (G'/G" pour une déformation de 20 % à 130° C et 0,033 Hz) et correspond à l'inverse de la tangente de l'angle de perte (tan δ) :
**1) Appareil utilisé :**
   L'appareil utilisé est commercialisé par la société Alpha Technologies sous la dénomination "RPA2000" ("Rubber Process Analyser"). Il permet la mesure des propriétés dynamiques des élastomères et des compositions de caoutchouc les incorporant.
**2) Préparation des échantillons :**
   La masse d'échantillon de polybutadiène est de 4,5 +/- 0,5 grammes. La protection des plateaux du « RPA2000 » (voir ci-dessous) est assurée par l'utilisation de films intercalaires qui sont obtenus à partir d'un rouleau de film « Nylon® Dartek f0143 » et qui sont placés entre ces plateaux et l'échantillon.
**3) Description du test :**
   L'échantillon est préchauffé trois minutes à 130° C dans la chambre "RPA" stabilisée thermiquement, avant de réaliser 10 cycles de sollicitation dynamique en balayage en fréquence de 0,033 Hertz à 16.667 Hertz, 20 % de déformation à 130° C. Le calcul des résultats est une moyenne sur les cinq derniers cycles.

### ANNEXE 4:

### Mesures de fluage à froid (ou « cold-flow »)

En vue de caractériser le taux de branchement ou « branching » des échantillons de polybutadiènes obtenus selon l'invention, on a mesuré leur « cold-flow » (littéralement écoulement ou fluage à froid). Le « cold-flow » est un phénomène caractéristique des élastomères, dont la mesure traduit l'aptitude du produit à s'écouler sous une faible contrainte. Cette méthode sollicite les produits à faible vitesse de cisaillement, ce qui permet de caractériser la macrostructure des élastomères en terme de taux de branchement, celui-ci limitant d'autant plus le fluage qu'il est plus élevé.

En outre, la mesure du fluage à froid permet d'apprécier le « collant » des gommes en phase de finition.

Cette caractérisation consiste à mesurer la masse de gomme qui s'écoule à travers une filière calibrée (diamètre = 6,35 mm, épaisseur = 0,5 mm), sous un poids fixé (masse de 1 kg), pendant un temps donné (6 h), à une température de 100° C.

### 1) Appareil utilisé :

L'appareillage pour la mesure du « cold-flow » comporte une coupe cylindrique, percée au fond. La mesure nécessite le poids calibré précité de 1 kg et une étuve ventilée.

### 2) Préparation des échantillons :

L'échantillon de gomme sur lequel est réalisée la mesure doit avoir une masse de 40 +/- 5 g. Les dimensions globales de l'échantillon sont environ 2 cm d'épaisseur pour un diamètre de 53 mm.

L'échantillon doit être dépourvu de bulles d'air. Pour cela, on doit réaliser, sous presse, 4 pastilles de gomme de 5 mm d'épaisseur à l'aide d'une entretoise fournie en acier inoxydable.

### 3) Description du test :

On place dans l'appareil environ 40 g de gomme. Sur la pastille de gomme, on positionne le poids calibré de 1 kg. L'ensemble est ensuite placé dans une étuve ventilée, préalablement préchauffée à 100° C et donc stable en température. Pendant la première heure en étuve, les conditions de mesures ne sont pas stabilisées. Après une heure, on découpe le produit extrudé et on le met au rebut.

La mesure dure ensuite 6 h, pendant lesquelles le produit est laissé en étuve. A la fin des 6 heures, on doit récupérer l'échantillon de produit en y pratiquant une découpe au ras de la surface du fond. Le résultat de l'essai est la masse de gomme pesée (en g).

## Revendications

1. Procédé de préparation d'un élastomère diénique, comprenant une réaction de polymérisation en continu ou en discontinu, en solution ou en masse, d'au moins un monomère diène conjugué avec un système catalytique, ledit système catalytique étant à base d'au moins :
- un diène conjugué,
- un sel d'un ou plusieurs métaux de terre rare d'un acide phosphorique organique, ledit sel étant en suspension dans au moins un solvant hydrocarboné inerte et saturé de type aliphatique ou alicyclique, et ledit métal ou lesdits métaux de terre rare sont présents selon une concentration égale ou supérieure à 0,002 mol/l.
- un agent d'alkylation constitué d'un alkylaluminium de formule AlR3 ou HAlR2 dans lesquelles R représente un radical alcoyle et H un atome d'hydrogène, et
- un donneur d'halogène appartenant à la famille des halogénures d'alkylaluminium, à l'exclusion des sesquihalogénures d'alkylaluminium,
**caractérisé en ce qu'**au moins un composé alkylaluminium de formule AlR3 ou HAlR2 dans lesquelles R représente un radical alcoyle et H un atome d'hydrogène, qui est identique ou non à celui dudit système catalytique, est introduit, mais non en même temps que le système catalytique, dans l'unité industrielle de polymérisation.

2. Procédé selon la revendication 1, **caractérisé en ce que** la totalité du ou des composé(s) alkylaluminium de formule AlR3 ou HAlR2 (R et H ayant les mêmes significations qu'en revendication 1) ajouté(s) est introduite dans l'unité industrielle de polymérisation avant l'introduction du système catalytique.

3. Procédé selon la revendication 1 ou 2, **caractérisé en ce qu'**antérieurement à la réaction de polymérisation, le composé alkylaluminium de formule AlR3 ou HAlR2 (R et H ayant les mêmes significations qu'en revendication 1) est mis en présence du ou des monomère(s) à polymériser.

4. Procédé selon la revendication 1 ou 2, **caractérisé en ce qu'**antérieurement à la réaction de polymérisation le composé alkylaluminium de formule AlR3 ou HAlR2 (R et H ayant les mêmes significations qu'en revendication 1) est mis en présence du ou des monomère(s) et du solvant de polymérisation.

5. Procédé selon une des revendications 1 à 4, **caractérisé en ce que** le rapport molaire (agent d'alkylation / sel de terre(s) rare(s)) dans ledit système catalytique présente une valeur allant de 1 à 10.

6. Procédé selon une des revendications 1 ou 5, **caractérisé en ce que** le rapport molaire (composé alkyl aluminium/ agent d'alkylation) est strictement supérieur à 0.

7. Procédé selon la revendication 6, **caractérisé en ce que** le rapport molaire varie de 0,01 à 10, et préférentiellement de 0,05 à 3.

8. Procédé selon une des revendications 1 à 7**, caractérisé en ce que** la quantité dudit composé alkylaluminium mis en présence avec le(s)dit(s) monomère(s) à polymériser varie de 10 à 5000 micromoles pour 100 g de monomère diène conjugué à polymériser.

9. Procédé selon la revendication 8, **caractérisé en ce que** l'on utilise ledit composé alkylaluminium selon une quantité allant de 50 à 1000 micromoles pour 100 g de monomère diène conjugué à polymériser, puis ledit système catalytique selon un rapport molaire (agent d'alkylation / sel de terre(s) rare(s)) allant de 1 à 5.

10. Procédé selon une des revendications 1 à 9, **caractérisé en ce que** l'on met en oeuvre ladite réaction en continu, ledit composé alkylaluminium étant mis en présence avec le(s)dit(s) monomère(s) à polymériser en une entrée de ligne située en amont d'au moins un réacteur de polymérisation.

11. Procédé selon la revendication 10, **caractérisé en ce que** l'on incorpore ledit système catalytique dans sa totalité dans l'unité industrielle de polymérisation, en ladite entrée de ligne.

12. Procédé selon la revendication 10, **caractérisé en ce que** l'on incorpore ledit système catalytique dans sa totalité dans l'unité industrielle de polymérisation directement dans ledit réacteur.

13. Procédé selon une des revendications 1 à 12, **caractérisé en ce que** l'on met en oeuvre ladite réaction dans un solvant de polymérisation hydrocarboné inerte ou bien en masse.

14. Procédé selon une des revendications 1 à 13**, caractérisé en ce que** ledit composé alkylaluminium est l'hydrure de diisobutylaluminium.

15. Procédé selon une des revendications 1 à 14, **caractérisé en ce que** ledit donneur d'halogène est un monohalogénure d'alkylaluminium, tel que le chlorure de diéthylaluminium.

16. Procédé selon une des revendications 1 à 15, **caractérisé en ce que** ledit sel est un tris[bis(2-éthylhexyl)phosphate] de terre(s) rare(s), tel que le tris[bis(2-éthylhexyl)phosphate] de néodyme.

17. Procédé selon une des revendications 1 à 16, **caractérisé en ce que** ledit agent d'alkylation comprend l'hydrure de diisobutylaluminium.

18. Procédé selon une des revendications 1 à 17, **caractérisé en ce que** le rapport molaire (donneur d'halogène/ sel) présente une valeur allant de 2 à 3,5.

19. Procédé selon une des revendications 1 à 18, **caractérisé en ce que** le rapport molaire (monomère diène conjugué / sel) présente une valeur allant de 15 à 70.

20. Procédé selon une des revendications 1 à 19, **caractérisé en ce que** ledit monomère diène conjugué est le butadiène, pour l'obtention d'un homopolymère du butadiène présentant à la fois :
- une viscosité Mooney ML(1+4) à 100° C, mesurée selon la norme ASTM D 1646, qui est égale ou supérieure à 40,
- un indice de polydispersité inférieur à 2,1,
- un taux d'enchaînement cis-1,4 supérieur à 90 %, et
- un fluage à froid réduit allant de 0,01 g à 0,5 g.

21. Procédé selon une des revendications 1 à 20, **caractérisé en ce que** ledit monomère diène conjugué est le butadiène, pour l'obtention d'un homopolymère du butadiène présentant un fluage à froid allant de 0,01 g à 0,3 g.

22. Procédé selon une des revendications 1 à 21 **caractérisé en ce que** le monomère diène conjugué est l'isoprène pour l'obtention d'un polyisoprène.

## Claims

1. Process for preparing a diene elastomer, comprising a continuous or batch polymerization reaction, in solution or in bulk, of at least one conjugated diene monomer with a catalyst system, said catalyst system being based on at least:
- one conjugated diene;
- one organic phosphoric acid salt of one or more rare-earth metals, said salt being in suspension and in at least one saturated and aliphatic or alicyclic, and inert hydrocarbon-based solvent and said rare-earth metal or metals being present in the catalytic system in a concentration greater than or equal to 0.002 mol/l;
- one alkylating agent composed of an alkyl aluminium of formula AlR₃ or HAlR₂ in which R represents an alkyl radical and H a hydrogen atom; and
- a halogen donor belonging to the family of alkylaluminium halides, with the exclusion of alkylaluminium sesquihalides,
**characterized in that** at least one alkylaluminium compound of formula AlR₃ or HAlR₂ in which R represents an alkyl radical and H a hydrogen atom, which is identical or not to that of said catalyst system, is introduced, but not at the same time as the catalyst system, into the industrial polymerization unit.

2. Process according to Claim 1, **characterized in that** all of the alkylaluminium compound(s) of formula AlR₃ or HAlR₂ (R and H having the same meanings as in Claim 1) added is introduced into the industrial polymerization unit before the introduction of the catalyst system.

3. Process according to Claim 1 or 2, **characterized in that** prior to the polymerization reaction, the alkyaluminium compound of formula AlR₃ or HAlR₂ (R and H having the same meanings as in Claim 1) is brought together with the monomer(s) to be polymerized.

4. Process according to Claim 1 or 2, **characterized in that** prior to the polymerization reaction, the alkyaluminium compound of formula AlR₃ or HAlR₂ (R and H having the same meanings as in Claim 1) is brought together with the monomer(s) and the polymerization solvent.

5. Process according to one of Claims 1 to 4, **characterized in that** the alkylating agent/salt of rare-earth element(s) molar ratio in said catalyst system has a value ranging from 1 to 10.

6. Process according to one of Claims 1 or 5, **characterized in that** the alkylaluminium compound/alkylating agent molar ratio is strictly greater than 0.

7. Process according to Claim 6, **characterized in that** the molar ratio varies from 0.01 to 10 and preferably from 0.05 to 3.

8. Process according to one of Claims 1 to 7, **characterized in that** the amount of said alkylaluminium compound brought together with said monomer(s) to be polymerized varies from 10 to 5,000 µmol per 100 g of conjugated diene monomer to be polymerized.

9. Process according to Claim 8, **characterized in that** said alkylaluminium compound is used in an amount ranging from 50 to 1,000 µmol per 100 g of conjugated diene monomer to be polymerized, then said catalyst system is used in an alkylating agent/salt of rare-earth element(s) molar ratio ranging from 1 to 5.

10. Process according to one of Claims 1 to 9, **characterized in that** said reaction is carried out continuously, said alkylaluminium compound being brought together with said monomer(s) to be polymerized in a line inlet located upstream of at least one polymerization reactor.

11. Process according to Claim 10, **characterized in that** said catalyst system is incorporated in its entirety in the industrial polymerization unit, in said line inlet.

12. Process according to Claim 10, **characterized in that** said catalyst system is incorporated in its entirety in the industrial polymerization unit directly in said reactor.

13. Process according to one of Claims 1 to 12, **characterized in that** said reaction is carried out in an inert hydrocarbon-based polymerization solvent or else in bulk.

14. Process according to one of Claims 1 to 13, **characterized in that** said alkylaluminium compound is diisobutylaluminium hydride.

15. Process according to one of Claims 1 to 14, **characterized in that** said halogen donor is an alkylaluminium monohalide, such as diethylaluminium chloride.

16. Process according to one of Claims 1 to 15, **characterized in that** said salt is a tris[bis(2-ethylhexyl)phosphate] of rare-earth element(s), such as neodymium tris[bis(2-ethylhexyl)phosphate].

17. Process according to one of Claims 1 to 16, **characterized in that** said alkylating agent comprises diisobutylaluminium hydride.

18. Process according to one of Claims 1 to 17, **characterized in that** the halogen donor/salt molar ratio has a value ranging from 2 to 3.5.

19. Process according to one of Claims 1 to 18, **characterized in that** the conjugated diene monomer/salt molar ratio has a value ranging from 15 to 70.

20. Process according to one of Claims 1 to 19, **characterized in that** said conjugated diene monomer is butadiene, in order to obtain a butadiene homopolymer having at the same time:
- a Mooney viscosity ML(1+4) at 100°C, measured according to the standard ASTM D 1646, which is greater than or equal to 40;
- a polydispersity index less than 2.1;
- a level of cis-1,4 linkages greater than 90%; and
- a reduced cold flow ranging from 0.01 g to 0.5 g.

21. Process according to one of Claims 1 to 20, **characterized in that** said conjugated diene monomer is butadiene, in order to obtain a butadiene homopolymer having a cold flow ranging from 0.01 g to 0.3 g.

22. Process according to one of Claims 1 to 21, **characterized in that** the conjugated diene monomer is isoprene in order to obtain a polyisoprene.

## Patentansprüche

1. Verfahren zur Herstellung eines Dienelastomers, bei dem man mindestens ein konjugiertes Dienmonomer mit einem katalytischen System in Lösung oder in Masse kontinuierlich oder diskontinuierlich polymerisiert, wobei das katalytische System mindestens basiert auf:
- einem konjugierten Dien,
- einem Salz einer organischen Phosphorsäure mit einem oder mehreren Seltenerdmetallen, wobei das Salz in Suspension in mindestens einem inerten und gesättigten KohlenwasserstoffLösungsmittel vom aliphatischen oder alicyclischen Typ vorliegt und das Seltenerdmetall bzw. die Seltenerdmetalle in dem katalytischen System in einer Konzentration größer gleich 0,002 mol/l vorliegt bzw. vorliegen,
- einem Alkylierungsmittel, das aus einer Alkylaluminiumverbindung der Formel AlR3 oder HAlR2, worin R für einen Alkylrest steht und H für ein Wasserstoffatom steht, besteht, und
- einem Halogendonor aus der Familie der Alkylaluminiumhalogenide mit Ausnahme der Alkylaluminiumsesquihalogenide,
**dadurch gekennzeichnet, daß** man mindestens eine Alkylaluminiumverbindung der Formel AlR3 oder HAlR2, worin R für einen Alkylrest steht und H für ein Wasserstoffatom steht, die mit derjenigen des katalytischen Systems identisch ist oder nicht, in die technische Polymerisationsanlage einspeist, aber nicht zur gleichen Zeit wie das katalytische System.

2. Verfahren nach Anspruch 1, **dadurch gekennzeichnet, daß** man die Gesamtheit der zugesetzten Alkylaluminiumverbindung(en) der Formel AlR3 oder HAlR2 (wobei R und H die gleichen Bedeutungen wie in Anspruch 1 besitzen) vor dem Einspeisen des katalytischen Systems in die technische Polymerisationsanlage einspeist.

3. Verfahren nach Anspruch 1 oder 2, **dadurch gekennzeichnet, daß** man vor der Polymerisationsreaktion die Alkylaluminiumverbindung der Formel AlR3 oder HAlR2 (wobei R und H die gleichen Bedeutungen wie in Anspruch 1 besitzen) mit dem zu polymerisierenden Monomer bzw. den zu polymerisierenden Monomeren zusammenbringt.

4. Verfahren nach Anspruch 1 oder 2, **dadurch gekennzeichnet, daß** man vor der Polymerisationsreaktion die Alkylaluminiumverbindung der Formel AlR3 oder HAlR2 (wobei R und H die gleichen Bedeutungen wie in Anspruch 1 besitzen) mit dem Monomer bzw. den Monomeren und dem Polymerisationslösungsmittel zusammenbringt.

5. Verfahren nach einem der Ansprüche 1 bis 4, **dadurch gekennzeichnet, daß** das Molverhältnis (Alkylierungsmittel/Salz von Seltenerdmetall(en)) in dem katalytischen System einen Wert von 1 bis 10 aufweist.

6. Verfahren nach einem der Ansprüche 1 bis 5, **dadurch gekennzeichnet, daß** das Molverhältnis (Alkylaluminiumverbindung/Alkylierungsmittel) strikt größer als 0 ist.

7. Verfahren nach Anspruch 6, **dadurch gekennzeichnet, daß** das Molverhältnis von 0,01 bis 10 und vorzugsweise von 0,05 bis 3 variiert.

8. Verfahren nach einem der Ansprüche 1 bis 7, **dadurch gekennzeichnet, daß** die Menge der mit dem zu polymerisierenden Monomer bzw. den zu polymerisierenden Monomeren zusammengebrachten Alkylaluminiumverbindung von 10 bis 5000 Mikromol auf 100 g zu polymerisierendes konjugiertes Dienmonomer variiert.

9. Verfahren nach Anspruch 8, **dadurch gekennzeichnet, daß** man die Alkylaluminiumverbindung in einer Menge von 50 bis 1000 Mikromol auf 100 g zu polymerisierendes konjugiertes Dienmonomer verwendet und dann das katalytische System in einem Molverhältnis (Alkylierungsmittel/Salz von Seltenerdmetall(en)) von 1 bis 5 verwendet.

10. Verfahren nach einem der Ansprüche 1 bis 9, **dadurch gekennzeichnet, daß** man die Umsetzung kontinuierlich durchführt, wobei man die Alkylaluminiumverbindung in einem vor dem mindestens einen Polymerisationsreaktor gelegenen Leitungseinlaß mit dem zu polymerisierenden Monomer bzw. den zu polymerisierenden Monomeren zusammenbringt.

11. Verfahren nach Anspruch 10, **dadurch gekennzeichnet, daß** man das katalytische System in seiner Gesamtheit in dem Leitungseinlaß in die technische Polymerisationsanlage einträgt.

12. Verfahren nach Anspruch 10, **dadurch gekennzeichnet, daß** man das katalytische System in seiner Gesamtheit direkt in dem Reaktor in die technische Polymerisationsanlage einträgt.

13. Verfahren nach einem der Ansprüche 1 bis 12, **dadurch gekennzeichnet, daß** man die Umsetzung in einem inerten Kohlenwasserstoff-Polymerisationslösungsmittel oder in der Masse durchführt.

14. Verfahren nach einem der Ansprüche 1 bis 13, **dadurch gekennzeichnet, daß** es sich bei der Alkylaluminiumverbindung um Diisobutylaluminiumhydrid handelt.

15. Verfahren nach einem der Ansprüche 1 bis 14, **dadurch gekennzeichnet, daß** es sich bei dem Halogendonor um ein Alkylaluminiummonohalogenid, wie Diethylaluminiumchlorid, handelt.

16. Verfahren nach einem der Ansprüche 1 bis 15, **dadurch gekennzeichnet, daß** es sich bei dem Salz um ein Tris[bis(2-ethylhexyl)phosphat] eines oder mehrerer Seltenerdmetalle, wie Neodymtris[bis(2-ethylhexyl)phosphat], handelt.

17. Verfahren nach einem der Ansprüche 1 bis 16, **dadurch gekennzeichnet, daß** das Alkylierungsmittel Diisobutylaluminiumhydrid umfaßt.

18. Verfahren nach einem der Ansprüche 1 bis 17, **dadurch gekennzeichnet, daß** das Molverhältnis (Halogendonor/Salz) einen Wert von 2 bis 3,5 aufweist.

19. Verfahren nach einem der Ansprüche 1 bis 18, **dadurch gekennzeichnet, daß** das Molverhältnis (konjugiertes Dienmonomer/Salz) einen Wert von 15 bis 70 aufweist.

20. Verfahren nach einem der Ansprüche 1 bis 19, **dadurch gekennzeichnet, daß** es sich bei dem konjugierten Dienmonomer um Butadien handelt, zur Herstellung eines Butadien-Homopolymers, das gleichzeitig:
- eine Mooney-Viskosität ML(1+4) bei 100°C, gemessen gemäß ASTM-Norm D 1646, die größer gleich 40 ist,
- einen Polydispersitätsindex von weniger als 2,1,
- einen Gehalt an cis-1,4-Verknüpfungen von mehr als 90% und
- einen reduzierten kalten Fluß von 0,01 bis 0, 5 g
aufweist.

21. Verfahren nach einem der Ansprüche 1 bis 20, **dadurch gekennzeichnet, daß** es sich bei dem konjugierten Dienmonomer um Butadien handelt, zur Herstellung eines Butadien-Homopolymers mit einem kalten Fluß von 0,01 bis 0,3 g.

22. Verfahren nach einem der Ansprüche 1 bis 21, **dadurch gekennzeichnet, daß** es sich bei dem konjugierten Dienmonomer um Isopren handelt, zur Herstellung eines Polyisoprens.
